# FASCICULE DE BREVET EUROPEEN

(11) **EP 1 042 263 B1**
(45) Date de publication et mention de la délivrance du brevet: **17.03.2004**
(21) Numéro de dépôt: 98958991.6
(22) Date de dépôt: 09.12.1998
(51) Int. Cl.: C07C 31/22, C07D 493/04, C08K 5/00, C08K 5/06

(54) **COMPOSITION D'ACETAL D'ALDITOL ET SON UTILISATION DANS LES MATIERES PLASTIQUES ET GELIFIEES**
ZUSAMMENSETZUNG VON ALDITOL-ACETALEN UND IHRER VERWENDUNG
ALDITOL ACETAL COMPOSITION AND ITS USE IN PLASTIC AND GELLED MATERIALS

(30) Priorité: 23.12.1997 FR 9716327
(43) Date de publication de la demande: 11.10.2000
(73) Titulaire: Roquette Frères, 62136 Lestrem (FR)
(72) Inventeur: MENTINK, Léon, F-59800 Lille (FR)
(74) Mandataire: Boulinguiez, Didier
(86) Numéro de dépôt international: PCT/FR1998/002669
(87) Numéro de publication internationale: WO 1999/033776

(56) Documents cités:
- EP-A- 0 286 522
- EP-A- 0 361 087
- EP-A- 0 522 558
- EP-A- 0 569 198
- EP-A- 0 651 006
- US-A- 4 562 265

## Description

La présente invention a pour objet une composition améliorée d'acétal d'alditol, en particulier de dibenzylidène sorbitol ou de l'un de ses dérivés.

Elle concerne notamment une nouvelle composition pulvérulente de diacétal d'alditol alcoylé.

Elle vise également un nouveau procédé pour améliorer l'écoulement et/ou la stabilité de compositions d'acétals d'alditol.

Enfin, la présente invention a également pour objet l'utilisation desdites compositions pour la préparation de matières plastiques ou de matières gélifiées ou d'additifs destinés auxdites matières.

Il est largement connu que les acétals d'alditol tels que le dibenzylidène sorbitol et ses dérivés peuvent être utilisés comme additifs, et notamment comme agents nucléants ou agents clarifiants de matières plastiques telles que les polyoléfines.

Ces produits sont également employés comme agents gélifiants ou viscosifiants de matières diverses telles que des compositions à usage cosmétique ou pharmaceutique, des compositions adhésives ou des peintures. Ces compositions peuvent, en outre, être mises en forme au sein d'articles tels que des bâtons ou "sticks" de colle ou de matière cosmétique, par exemple de déodorants ou des désodorisants d'atmosphère.

L'un des principaux inconvénients liés à l'utilisation industrielle des acétals d'alditol tels que le dibenzylidène sorbitol et ses dérivés, concerne le mauvais écoulement de ces produits. Celui-ci est dû, au moins en partie, au caractère généralement très pulvérulent et très collant de ces produits. Ceci entraîne des difficultés au niveau des opérations industrielles de transport, de broyage, d'ensachage, de dosage, de mélange, de stockage, de nettoyage ou autres.

En particulier, les poudres d'acétals d'alditol forment facilement des "voûtes" au sein des cuves de stockage et/ou des tuyauteries de transport. Ceci empêche ou entrave leur acheminement, leur dosage et/ou leur évacuation au niveau des trémies d'alimentation et des systèmes doseurs des unités industrielles, par exemple d'unités destinées à la préparation de matières plastiques ou d'additifs pour matières plastiques.

Par "matières plastiques", on entend notamment les polyoléfines, en particulier l'ensemble des polymères à base de propylène et/ou d'éthylène, les polyamides, les polyesters thermoplastiques, les résines vinyliques, les résines acryliques et leurs mélanges.

Ce problème d'écoulement des formes pulvérulentes d'acétals d'alditol n'a pu jusqu'alors être résolu, en pratique industrielle, que par la mise en oeuvre, chez les fabricants et/ou utilisateurs de ces produits, de dispositifs adaptés, tels que des systèmes d'alimentation pneumatique particuliers ou des trémies dont le revêtement interne est recouvert de TEFLON.

Outre le fait que de tels dispositifs peuvent être coûteux et/ou complexes, ils ne permettent pas toujours d'éviter les phénomènes de "voûte" précités ou pour le moins des phénomènes d'encrassement au niveau des trémies, des systèmes doseurs ou, plus en aval, des vis de transport acheminant les mélanges jusqu'aux unités de préparation des matières plastiques ou gélifiées.

Par ailleurs, au sein même des compositions de matières dans lesquelles ils ont pu être introduits et dosés de manière satisfaisante, les acétals d'alditol peuvent manifester une mauvaise aptitude à la dispersion. Ce phénomène peut induire, notamment dans les matières plastiques et gélifiées, une hétérogénéité ou une altération plus ou moins prononcée des caractéristiques finales desdites matières (aspect général, caractéristiques organoleptiques, optiques, mécaniques, ...).

Différentes technologies ont été proposées afin de pallier les problèmes précités de mauvaise dispersibilité des acétals d'alditol, en particulier du dibenzylidène sorbitol et de ses dérivés. Il a par exemple été décrit dans le brevet japonais JP 60-101131, le séchage puis le broyage fin d'un diacétal d'alditol préalablement traité par de l'acide téréphtalique en présence d'un surfactant anionique.

Il a également été préconisé la lyophilisation d'un gel de diacétal d'alditol dans un solvant, comme divulgué dans le brevet japonais JP 62-253646. Le produit lyophilisé ainsi obtenu présente une densité "après tassement" faible, à savoir de l'ordre de 100 g/l, en tous cas très significativement diminuée (d'un facteur de 3 environ) par rapport au diacétal d'alditol de départ.

Plus récemment, il a été proposé par le brevet EP 569.198 le broyage ultrafin de diacétals d'alditol sur des dispositifs adaptés, par exemple associant lit fluidisé et turbine à très haute vitesse, en vue d'obtenir des produits présentant une granulométrie moyenne particulièrement faible, à savoir au plus égale à 15 µm et, de préférence, inférieure à 6 µm.

A la lecture de l'exemple 2 de ce document, il apparaît qu'un tel traitement de broyage ultrafin appliqué à du dibenzylidène sorbitol de marque "MILLAD^{R} 3905" s'accompagne d'une diminution très significative (d'un facteur de 3,3 environ) de la densité "après tassement" ("packed bulk density") du produit.

Plus récemment encore, d'autres technologies ont été préconisées en vue d'améliorer la dispersibilité de diacétals d'alditol, et notamment :
- la préparation, par séchage/pulvérisation, d'une poudre fine à base d'un mélange entre un diacétal d'alditol et un phosphite particulier, ledit mélange ayant été préalablement solubilisé dans un solvant (brevet EP 651.006), ou
- le séchage poussé et le broyage, en particulier dans un séchoir instantané, d'un diacétal d'alditol humide, le produit séché/broyé obtenu présentant une teneur en eau résiduelle très basse (0,01 %) et une densité apparente de l'ordre de 200 g/l environ (brevet JP 06-048783).

Il en résulte que les moyens préconisés pour garantir une bonne dispersibilité des acétals d'alditol au sein des matières plastiques et autres, sont généralement complexes et/ou coûteux voire dangereux, notamment du fait qu'ils impliquent la mise en oeuvre de matériels de séchage, de matériels de broyage et/ou de solvants, spécifiques.

En outre, comme indiqué, ces moyens ont généralement pour but ou pour effet de diminuer significativement la densité des acétals d'alditol, ce qui en augmente le caractère poussiéreux et la dangerosité (risques d'explosion et d'inhalation) et en détériore l'aptitude à l'écoulement.

Un autre inconvénient lié à l'utilisation industrielle des acétals d'alditol, en tout cas d'une partie d'entre eux comme par exemple certains dérivés alcoylés ou halogénés du dibenzylidène sorbitol, trouve son origine dans le caractère instable de ces produits. Cette instabilité se manifeste en particulier par des problèmes d'odeur et de réduction d'efficacité dans certaines conditions d'usage.

Ces problèmes peuvent être organoleptiquement décelables au niveau même du produit, i.e dès avant tout traitement applicatif ou toute utilisation particulière de celui-ci.

Ils peuvent n'être décelables organoleptiquement qu'au moment où l'acétal d'alditol est utilisé industriellement, par exemple lors du thermoformage d'une matière plastique dans laquelle l'acétal d'alditol a été incorporé.

Un tel traitement thermique peut, entre autres, générer, favoriser ou amplifier des phénomènes de décomposition, notamment d'hydrolyse, et/ou de sublimation de l'acétal d'alditol et l'émission d'odeurs indésirables, en particulier de nature aldéhydique.

Ceci est particulièrement préjudiciable pour les matières destinées à être mises en contact avec des produits alimentaires, pharmaceutiques ou cosmétiques.

Cette instabilité, notamment thermique, des acétals d'alditol s'accompagne généralement d'une baisse de leur efficacité en tant qu'agents nucléants ou clarifiants, les produits de décomposition ou d'hydrolyse des acétals d'alditol ne pouvant jouer de tels rôles.

Différentes technologies ont été proposées afin d'améliorer la stabilité, en particulier la stabilité thermique, des acétals d'alditol, notamment le dibenzylidène sorbitol et ses dérivés alcoylés ou halogénés, et ainsi de minimiser ou masquer, voire de supprimer les problèmes d'odeur et/ou de baisse d'efficacité liés à l'usage de ces produits.

Ces problèmes peuvent, en particulier, être dus à la présence résiduelle, au sein même des matières plastiques, d'espèces aptes à catalyser la décomposition de diacétals d'alditol tels que des résidus de catalyseurs de polymérisation de nature acide, comme décrit dans le brevet EP 68.773.

Ce brevet préconise l'incorporation, au sein de matières plastiques particulières (polyéthylènes linéaires basse densité à teneurs élevées en catalyseurs résiduels), d'inhibiteurs de décomposition de diacétals choisis dans des familles chimiques très diverses (séquestrants des métaux, amines, alcènes, époxydes, esters cycliques, ...).

Il a également été proposé, comme dans le brevet EP 298.375, de traiter la surface de diacétals d'alditol avec des sels métalliques d'acides aliphatiques ou d'acides lactiques en vue d'en améliorer la stabilité thermique. Selon les exemples de ce brevet, du 1,3-2,4-di(méthylbenzylidène) sorbitol est stabilisé par mélange à chaud avec un poids équivalent de stéarate de calcium, le mélange obtenu étant broyé après refroidissement avant d'être introduit dans une résine de polypropylène.

Le brevet EP 361.087 décrit l'incorporation, dans une polyoléfine cristalline, de cyclodextrine comme agent stabilisant du dibenzylidène sorbitol ou de ses dérivés.

Il a également été préconisé d'incorporer une amine primaire aliphatique dans du polypropylène aux fins de diminuer l'odeur générée par le diacétal d'alditol qu'il contient, comme décrit dans le brevet JP 4-82890.

Pour sa part, le brevet EP 522.558 décrit la stabilisation du dibenzylidène sorbitol et de ses dérivés par mélange, de préférence en milieu solvant (méthanol), avec 0,05 à 20 % en poids d'acide sorbique et/ou de sorbate de potassium.

Le brevet JP 9-286788 décrit la stabilisation de DBS et dérivés par adjonction de polyalcools, cette adjonction pouvant se faire soit au cours du processus de préparation du diacétal d'alditol soit, postérieurement, par mélange physique à sec ou en présence d'un solvant tel que l'eau ou un alcool.

Selon les enseignements de ce brevet, et en particulier de ses exemples, le polyol est avantageusement introduit à des taux relativement élevés, en particulier à des taux de 20 à 150% par rapport au poids de diacétal.

Par ailleurs, les exemples envisagent toujours la mise en oeuvre du polyol dans un solvant, en l'occurrence l'isopropanol, dans lequel est dispersé le diacétal, ce dernier étant lui-même généralement apporté sous forme d'une suspension dans un autre solvant, en l'occurrence le méthanol.

La composition de ce diacétal est récupérée après chauffage et homogénéisation du mélange résultant, avec évaporation de tout solvant utilisé.

Il apparaît cependant, comme il sera exemplifié ci-après, qu'une composition ainsi préparée conserve un mauvais écoulement et un caractère collant. En outre, sa densité aérée n'est en aucun cas augmentée.

Enfin, le brevet EP 569.198 précité, relatif à des diacétals de sorbitol ou xylitol de granulométries ultrafines, indique que de tels produits réduisent les problèmes de couleur et d'odeur des produits finis. Ce brevet est le seul qui, en fait, décrit la possibilité d'obtenir par l'application d'une seule et même technologie (broyage ultrafin), des produits qui soient a priori améliorés à la fois en termes de "dispersibilité" et en termes "d'odeur".

Cependant, comme indiqué précédemment, cette technologie implique la mise en oeuvre de dispositifs de broyage très particuliers et conduit à l'obtention de formes pulvérulentes très peu denses et s'écoulant très difficilement.

Il existait donc un besoin de disposer d'un moyen simple, non coûteux et non dangereux permettant d'améliorer l'écoulement et/ou la stabilité des acétals d'alditol et ce, bien évidemment, sans nuire aux autres caractéristiques fonctionnelles de ces produits et sans en diminuer l'applicabilité, en particulier en tant qu'additifs pour matières plastiques et matières gélifiées.

Le mérite de la Société Demanderesse est d'avoir trouvé, après de nombreuses recherches, qu'un tel moyen pouvait consister à adjuvanter lesdits acétals avec certains composés sélectionnés, à savoir les tocophérols et leurs dérivés, les polyols et leurs dérivés non gras et les mélanges de ceux-ci.

De façon plus précise, la présente invention a pour objet une composition d'acétal d'alditol à écoulement amélioré et/ou à stabilité améliorée, caractérisée en ce qu'elle comprend au moins un acétal d'alditol et au moins un adjuvant choisi dans le groupe comprenant les tocophérols et leurs dérivés, ainsi que les polyols et leurs dérivés non gras, et en ce qu'elle présente une densité aérée supérieure à 250 g/l.

La composition d'acétal d'alditol selon l'invention peut également être caractérisée par le fait que l'acétal d'alditol et l'adjuvant sélectionné tel que défini ci-dessus, ont subi, en présence l'un de l'autre, un traitement de mise en forme et/ou de densification, en particulier de granulation, de compactage ou d'extrusion.

L'amélioration de l'écoulement des compositions d'acétals d'alditol qui peut être obtenue par mise en oeuvre de tels adjuvants peut se traduire, en particulier, par :
- une propension moins marquée à créer des voûtes, des encrassements ou autres entraves, au niveau des dispositifs industriels classiques de stockage, transport, évacuation, dosage ou mélange, et/ou
- une propension moins marquée à générer des "fines" ou poussières lors de leur manipulation ou de leur usage.

A cet effet, les adjuvants précités peuvent jouer le rôle d'agents liants ou de densification des acétals d'alditol.

L'amélioration de la stabilité des compositions d'acétals d'alditol qui peut par ailleurs être obtenue par mise en oeuvre desdits adjuvants peut se traduire, en particulier, par une propension moins marquée à émettre, pendant et/ou après traitement thermique, des odeurs indésirables décelables organoleptiquement et/ou par une transparence encore améliorée des matières plastiques dans lesquelles sont incorporées lesdites compositions.

A cet effet, les adjuvants précités peuvent également jouer, vis à vis des acétals d'alditol, le rôle d'agents stabilisants ou d'agents masquants d'odeurs.

Par "acétal d'alditol" au sens de la présente invention, on entend, en particulier, les diacétals d'alditol, notamment ceux résultant de la déhydrocondensation, en deux endroits, d'un alditol à cinq ou six atomes de carbone avec un aldéhyde benzoïque.

Ledit alditol peut notamment être choisi dans le groupe comprenant le sorbitol, le xylitol, le mannitol, le ribitol, l'arabitol et l'iditol. Il peut être modifié au niveau du dernier atome de carbone de sa chaîne, en particulier par introduction d'un groupement carboxylique et consister ainsi en un gluconate ou un xylonate.

L'aldéhyde benzoïque mis en oeuvre en vue de la préparation des acétals d'alditol utilisables selon l'invention, peut notamment consister en du benzaldéhyde, du 1-naphtaldéhyde ou en l'un quelconque de leurs dérivés respectifs.

De manière préférentielle, l'aldéhyde benzoïque mis en oeuvre consiste en du benzaldéhyde ou en l'un quelconque de ses dérivés, par exemple ceux substitués, en un ou plusieurs endroits, par un groupement alcoyle, alcoxyle, hydroxyle, halogène, thioalcoyle ou sulfoalcoyle.

Lorsque le benzaldéhyde est substitué en plusieurs endroits, ses substituants peuvent ou non être identiques. Ils peuvent également former entre eux un cycle carboné.

De manière avantageuse, le benzaldéhyde est substitué en un, deux ou trois endroits par un groupement alcoyle, en particulier méthyle ou éthyle, par un groupement halogène, en particulier chloré ou fluoré, par un groupement hydroxyle et/ou par un groupement alcoxyle, en particulier méthoxyle. La substitution peut notamment se faire en positions 2 (ortho), 3 (méta) et/ou 4 (para) du benzaldéhyde.

L'acétal d'alditol utilisable selon l'invention peut être choisi en particulier parmi ceux décrits au niveau des brevets européens EP 286.522 et EP 421.634 et/ou au niveau de l'un quelconque des brevets précédemment cités dans le cadre de la présente description.

De préférence, l'acétal d'alditol est un diacétal d'alditol choisi dans le groupe comprenant le 1,3-2,4-di(benzylidène) sorbitol (ci-après "DBS"), le 1,3-2,4-di(benzylidène) xylitol (ci-après "DBX") et leurs dérivés, notamment alcoylés et/ou halogénés, de préférence choisi parmi le DBS et ses dérivés alcoylés.

De manière particulièrement avantageuse, le diacétal d'alditol est choisi parmi les dérivés méthylés du DBS, en particulier ceux obtenus par déhydrocondensation du sorbitol avec un benzaldéhyde méthylé, pour le moins, en position 3 ou 4 de son cycle (positions respectives "méta" ou "para").

Les dérivés méthylés du DBS consistent notamment en les produits suivants :
- le 1,3-2,4-di(4-éthylbenzylidène) sorbitol,
- le 1,3-2,4-di(4-méthylbenzylidène) sorbitol,
- le 1,3-2,4-di(3-méthylbenzylidène) sorbitol, et
- le 1,3-2,4-di(3,4 diméthylbenzylidène) sorbitol.

Les adjuvants utilisables selon l'invention en vue d'améliorer l'écoulement et/ou la stabilité des acétals d'alditol sont, comme précisé ci-avant, sélectionnés parmi les tocophérols et leurs dérivés, les polyols et leurs dérivés non gras.

Par "tocophérols" au sens de la présente invention, on entend, en particulier, le "tocol" ou 3,4-dihydro-2-methyl-2(4,8,12-triméthyltridecyl)-2H-1-benzo-propane-6-ol et l'ensemble de ses dérivés, notamment alcoylés, qu'ils soient d'origine naturelle ou synthétique.

Les dérivés alcoylés du tocol peuvent notamment consister en des produits méthylés sur l'une, au moins, des positions 5,7 et/ou 8, du cycle benzopyranique du tocol, et en particulier correspondre aux α-, β-, gamma- et δ-tocophérols et à leurs mélanges.

De manière avantageuse, on utilise un tocophérol, naturel ou synthétique, constitué, en tout ou partie, d'α-tocophérol et, en particulier constitué de vitamine E, naturelle ou synthétique.

Les dérivés de tocophérols peuvent consister en des tocophérols estérifiés, notamment en position 6 du cycle benzopyranique, par des substituants divers tels que des groupements acétate ou succinate.

Par "dérivés de tocophérols" au sens de la présente invention, on entend également le tocotriénol et l'ensemble de ses dérivés alcoylés et/ou estérifiés. Il peut s'agir de dérivés alcoylés, tels que les α-, β-, gamma- et δ-tocotriénols et leurs mélanges.

Les composés et dérivés précités sont largement décrits dans la littérature et, par exemple dans :
- l'ouvrage "THE MERCK INDEX", TENTH EDITION, 1983, pages 1358-1360 et 1437,
- l'article "VITAMIN E : Biological and Clinical Aspects of Topical Treatment" de K. FURUSE, COSMETICS & TOILETRIES, Vol. 102, Nov. 1987, pages 99-115,
- le brevet européen EP 384.472, page 3 lignes 45-47,
ces passages étant incorporés à la présente description.

Les polyols utilisables comme adjuvants selon l'invention sont notamment choisis parmi les sucres-alcools, le glycérol, le pentaérythritol et leurs dérivés non gras respectifs.

Par "sucres alcools" on entend notamment les alditols précités pour la préparation d'acétals d'alditol, le maltitol, l'isomaltitol, l'isomaltulose hydrogéné, le maltotriitol, les hydrolysats d'amidon hydrogénés, l'érythritol, le lactitol et leurs mélanges.

Les dérivés non gras de l'ensemble de ces produits peuvent en dériver par déshydratation, condensation, polymérisation, modification physique et/ou modification chimique, plus ou moins poussées. Ils peuvent consister, à titre d'exemples, en de l'isosorbide, de l'isomannide, du sorbitan, des gluconates, des xylonates, du dipentaérythritol, des dérivés phénoliques du pentaérythritol, des dérivés non gras du glycérol tels que des dérivés éthoxylés, etc.

De manière préférentielle, les polyols utilisables conformément à la présente invention sont choisis parmi le sorbitol, le glycérol et le pentaérythritol.

Selon une première variante, la composition d'acétal d'alditol à écoulement amélioré et/ou à stabilité améliorée selon l'invention est caractérisée en ce qu'elle comprend :
- de 50 à 99 %, en poids, d'acétal(s) d'alditol, et
- de 1 à 50 %, en poids, d'au moins un adjuvant tel que défini précédemment, ces pourcentages étant exprimés par rapport au poids total d'acétal(s) d'alditol et d'adjuvant(s) contenu dans ladite composition.

De manière avantageuse, ladite composition d'acétal d'alditol est caractérisée en ce qu'elle comprend de 1 à 20 %, de préférence de 3 à 20 % en poids d'au moins un tel adjuvant.

La composition d'acétal d'alditol selon l'invention peut se présenter sous des formes solides diverses, de préférence sous une forme pulvérulente et/ou granulaire et en particulier sous la forme d'une poudre densifiée ou compactée, de granules, de "pellets", de pastilles ou d'extrudats.

Les formes pulvérulentes telles que les poudres densifiées ou compactées peuvent notamment se présenter sous la forme de compositions à écoulement libre ("free-flowing powders") à base de particules de forme et dimensions variables et, à titre d'exemple, d'agglomérats en forme d'écailles dont la plus grande dimension est généralement comprise entre 1 et 10 mm environ et l'épaisseur inférieure à 1 mm environ.

Ces diverses formes solides peuvent d'ailleurs contenir d'autres composants que l'acétal d'alditol et l'adjuvant. Lorsque les compositions selon l'invention sont destinées à la préparation de matières plastiques, elles peuvent, à titre d'exemple, contenir un ou plusieurs tiers constituants choisis parmi les additifs décrits dans les brevets précités tels que, entre autres, les agents anti-oxydants, stabilisants, neutralisants, chélatants, nucléants, clarifiants, lubrifiants, anti-UV antivoile, antiblock, antistatiques, les charges, les pigments, les phosphites.

La mise en présence entre eux de l'acétal d'alditol et de l'adjuvant au sein de la composition selon l'invention peut être opérée de diverses manières et, en particulier, par mélange à chaud ou à froid , généralement suivi par l'une ou l'autre des techniques connues de granulation, de compactage, de pelletisation ou d'extrusion.

La Société Demanderesse a tout d'abord découvert qu'une mise en présence entre eux de l'acétal d'alditol et de l'adjuvant ne pouvait, pour être efficace, résulter d'un simple mélange physique entre ces deux constituants.

La Société Demanderesse a ensuite trouvé, comme il sera exemplifié par ailleurs, qu'il était avantageux de mélanger, à froid, un acétal d'alditol tel qu'un dérivé méthylé du DBS et un adjuvant tel que le glycérol, le sorbitol ou le pentaérythritol puis de soumettre, également à froid, le mélange obtenu à une opération de compactage, par exemple sur un compacteur à rouleaux.

Par mélange ou compactage "à froid", on entend des opérations effectuées en absence de toute source extérieure de chaleur dont la mise en oeuvre aurait pour but d'augmenter significativement, directement ou indirectement, la température du mélange. On exclut également toute opération ayant pour but de faire fondre ou de solubiliser dans un solvant un adjuvant se présentant sous forme solide à température ambiante.

Par "température ambiante", on entend généralement une température inférieure à 30°C, se situant généralement entre 15 et 25°C environ.

Dans le cadre de l'invention, on utilise de préférence l'adjuvant dans l'état physique ou il se trouve à température ambiante.

Cette manière de procéder à température ambiante permet de limiter au maximum les risques de dégradation de l'acétal d'alditol, les dépenses énergétiques et la dangerosité, liés à un procédé qui impliquerait des opérations de chauffage et/ou l'usage d'un solvant.

De manière particulièrement avantageuse, le mélange préparé et compacté "à froid" contient un adjuvant qui a été mis en oeuvre sous forme solide, i.e. sous forme ni liquide ni pâteuse, et qui est maintenu sous cette forme lors des opérations de mélange/compactage.

De façon surprenante et inattendue, la Demanderesse a trouvé qu'un adjuvant solide (i.e. non fondu ni solubilisé dans un solvant), amorphe ou cristallin, pouvait et ce, par simple pression, parfaitement jouer le rôle d'agent liant et permettre l'obtention de compositions d'acétals d'alditol améliorées à la fois en termes d'écoulement, de densité et de dispersibilité.

Selon la Demanderesse, l'état non fondu du liant semble éviter les problèmes d'adhérence de la composition obtenue sur les parois des enceintes de préparation, transport, broyage, ensachage, dosage, mélange, stockage, ...

La Demanderesse a également constaté qu'en procédant "à froid", notamment à température ambiante, avec un adjuvant solide, la structure cristalline du diacétal contenu au sein de la composition est non significativement modifiée par rapport à la structure cristalline du diacétal d'origine, non adjuvanté.

A l'inverse, elle a constaté qu'avec l'emploi d'un liant utilisé à l'état liquide, solubilisé ou fondu, cette structure cristalline est plus ou moins fortement altérée.

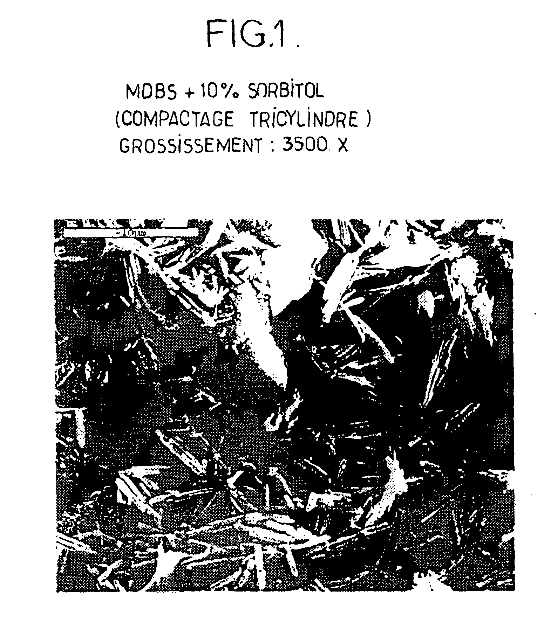

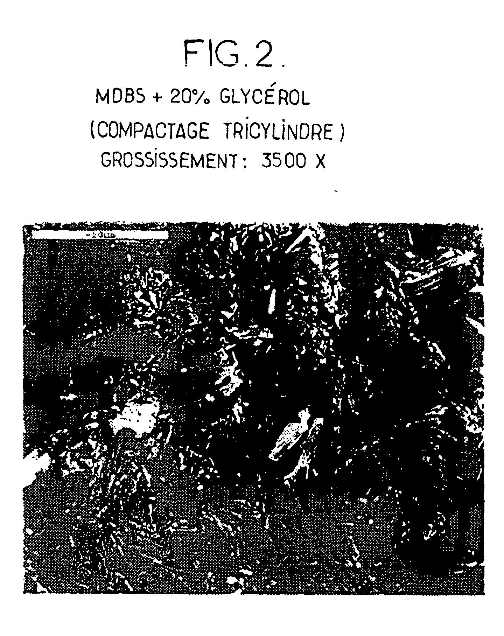

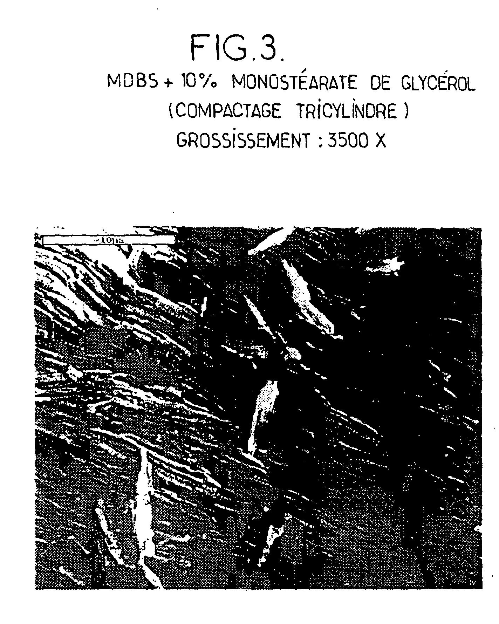

A titre d'exemple, la Figure I représente une vue au Microscope Electronique à Balayage ("MEB" - grossissement 3500 fois) d'une composition d'acétal d'alditol conforme à l'invention, obtenue par compactage sur compacteur tricylindre et à 20°C environ, de 1,3-2,4 di(3-méthylbenzylidène) sorbitol (ci-après "MDBS") avec 10%, en poids, d'un polyol solide à cette température, en l'occurrence du sorbitol.

On observe que la structure cristalline du diacétal contenu dans la composition ainsi préparée, n'est pas significativement altérée puisque, comme le MDBS d'origine et de manière générale comme les dérivés méthylés du DBS, cette structure se présente majoritairement (i.e. pour plus de 50% de son poids) sous la forme de bâtonnets de longueur comprise entre 5 et 10 µm et dont les contours sont bien individualisés. Ces cristaux, comme ceux du MDBS d'origine, ne son pas orientés dans une direction préférentielle.

La Figure II représente une vue au MEB d'une composition d'acétal d'alditol également conforme à l'invention obtenue, dans les mêmes conditions, à partir de MDBS et de 20%, en poids, d'un polyol liquide à 20°C, en l'occurrence du glycérol.

Dans ce cas la structure cristalline du MDBS est relativement altérée et se présente sous forme d'amas irréguliers, non préférentiellement orientés, de bâtonnets aux contours mal individualisés et ayant majoritairement une longueur inférieure à 5 µm.

La Figure III représente une vue au MEB d'une composition de MDBS obtenue de la même façon si ce n'est que l'on a mis en oeuvre 10%, en poids, d'un adjuvant, en l'occurrence du monostéarate de glycérol, apporté sous forme fondue et maintenu dans cet état lors des opérations de mélange et mise en forme.

Dans ce cas, la structure cristalline du MDBS est fortement altérée. On observe un magma cristallin, plus ou moins continu, orienté selon une direction préférentielle, constitué de structures allongées d'apparence souple et aux contours non individualisés.

En suite de quoi, la présente invention a également pour objet un procédé pour améliorer l'écoulement et/ou la stabilité d'un acétal d'alditol caractérisé en ce qu'il comporte au moins une étape au cours de laquelle on mélange, à froid, et on met en forme et/ou on densifie, également à froid et en particulier par granulation, compactage ou extrusion, ledit acétal d'alditol avec au moins 1%, de préférence avec 3 à 20% en poids, exprimé par rapport au poids total du mélange, d'un adjuvant apporté et maintenu à l'état solide, ledit adjuvant étant de préférence un agent stabilisant ou masquant d'odeur de l'acétal d'alditol.

La présente invention couvre également, en tant que produit industriel nouveau, une composition de diacétal d'alditol alcoylé, de préférence méthylé, caractérisé en ce qu'elle :
a) s'écoule librement,
b) contient au moins un adjuvant qui :
   - est solide à température ambiante,
   - de préférence, représente de 3 à 20% du poids total de diacétal d'alditol et d'adjuvant contenu dans ladite composition, et
c) contient un diacétal d'alditol alcoylé se présentant majoritairement sous la forme de cristaux en bâtonnets de longueur comprise entre 5 et 10 µm et dont les contours sont bien individualisés.

Les opérations de compactage, mais également de granulation ou de pelletisation notamment, permettent l'obtention, de manière simple, reproductible et peu coûteuse, de compositions de diacétals d'alditol selon l'invention présentant des densités aérées supérieures à 250 g/l, pouvant atteindre 700 g/l.

Par "densité aérée", on entend la masse volumique d'une composition telle que mesurée ans aucun tassement ni tapotement. Cette mesure se fait en laissant la composition s'écouler sous son propre poids dans une éprouvette graduée de 100 ml, au travers d'un entonnoir aux parois déformables (entonnoir en papier).

Malgré de telles densités, la Société Demanderesse a observé que ces compositions de diacétals d'alditol se dispersaient de façon totalement satisfaisante au sein des matières dans lesquelles elles étaient introduites et y présentaient, de façon surprenante, une efficacité non diminuée, voire améliorée.

La composition de diacétal d'alditol améliorée selon l'invention est donc également caractérisée par le fait qu'elle présente une densité aérée comprise entre 275 et 700 g/l et de préférence comprise entre 300 et 650 g/l. Cette densité peut notamment être comprise entre 300 et 490 g/l.

A la connaissance de la Société Demanderesse, une composition pulvérulente de diacétal d'alditol alcoylé s'écoulant librement et présentant une telle densité aérée, représente un produit industriel nouveau dont les avantages inattendus seront exemplifiés par ailleurs.

En suite de quoi la présente invention a également pour objet une composition pulvérulente de diacétal d'alditol alcoylé, en particulier méthylé, s'écoulant librement et présentant une densité aérée supérieure à 250 g/l, de préférence comprise entre 275 et 700 g/l et plus préférentiellement entre 300 et 650 g/l.

De manière très avantageuse, de telles compositions pulvérulentes présentent une densité aérée comprise entre 300 et 490 g/l.

Les compositions de diacétals d'alditol selon l'invention trouvent une utilité particulière dans la préparation de matières plastiques ou de matières gélifiées, mais également dans la préparation d'additifs destinés auxdites matières.

Elles peuvent notamment être utilisées, qu'elles se présentent d'ailleurs sous forme de poudres, par exemple de poudres densifiées ou compactées, ou sous forme de granulats, pour la préparation d'additifs pour matières plastiques se présentant avantageusement sous forme granulaire.

De tels additifs peuvent notamment consister en des mélanges prêts à l'emploi, se présentant sous forme de granulats s'écoulant librement et contenant en final,outre l'acétal d'alditol et l'adjuvant selon l'invention, un ou plusieurs tiers constituants choisis parmi les additifs décrits dans les brevets précités. De tels mélanges sont connus de la profession sous des vocables tels que "one pack", "custom blend", "preblend" ou "no dust blend".

Par "additifs pour matières plastiques" on entend également les mélanges-maîtres ("masterbatchs"), se présentant sous forme de granulats de matière plastique, par exemple de polypropylène, dans lesquels ont été prédispersés tout ou partie des additifs devant, en final, être incorporés au produit fini.

Quel que soit l'usage auquel on destine les compositions selon l'invention, on dispose désormais de nouveaux procédés pour améliorer l'écoulement et/ou la stabilité d'un acétal d'alditol. Un procédé peut notamment être caractérisé en ce qu'il comporte au moins une étape au cours de laquelle on mélange et on met en forme et/ou on densifie de manière quelconque, en particulier par granulation ou compactage, ledit acétal d'alditol avec au moins 1 % en poids, exprimé par rapport au poids total du mélange, d'un adjuvant choisi parmi les tocophérols et leurs dérivés, les polyols et leurs dérivés non gras et les mélanges quelconques de ces produits.

Il ressort par ailleurs de ce qui précède que le concept de la présente invention repose également sur un procédé pour densifier et/ou améliorer l'écoulement d'une composition de diacétal d'alditol, de préférence alcoylé et plus préférentiellement méthylé, utilisant un agent stabilisant ou masquant d'odeur dudit diacétal, ledit agent se présentant de préférence à l'état solide lors de son utilisation.

L'invention pourra être encore mieux comprise à l'aide des exemples qui suivent et qui ne sont donnés qu'à titre purement illustratif.

### EXEMPLE 1 : PREPARATION DE COMPOSITIONS D'ACETALS D'ALDITOL CONFORMES A L'INVENTION

Dans un mélangeur de type "ROBOT-COUPE" on introduit, à température ambiante, un dérivé alcoylé de DBS du commerce, en l'occurrence du 1,3-2,4-di(4-méthylbenzylidène) sorbitol (ci-après désignés "MDBS") se présentant sous la forme d'une poudre s'écoulant difficilement et de densité aérée faible (160 g/l) ainsi que, 11 % en poids, exprimé par rapport au poids de diacétal d'alditol, de l'un des adjuvants suivants, conformes à l'invention : glyçérol, sorbitol, pentaérythritol et vitamine E.

Après mélange pendant 5 minutes à température ambiante, chacune des compositions ainsi obtenues est soumise à une opération de compactage à froid sur un compacteur tricylindre du type de ceux utilisés pour le raffinage du sucre ou du chocolat.

Les compositions résultantes présentent un écoulement très significativement amélioré et une densité aérée très significativement augmentée, à savoir de l'ordre d'environ 330-340 g/l (obtenue avec sorbitol ou pentaérythritol) à environ 370 g/l (obtenue avec glycérol ou vitamine E).

Cet exemple montre l'intérêt des adjuvants sélectionnés dans le cadre de l'invention comme agents liants ou agents de densification des acétals d'alditol.

De manière remarquable, ces adjuvants permettent et ce, même à des taux d'introduction relativement faibles, de préparer des poudres d'acétals d'alditol qui présentent, simultanément, un écoulement libre et une densité aérée élevée.

Ils permettent notamment de préparer des poudres de dérivés alcoylés de DBS s'écoulant librement et présentant des densités aérées (très) supérieures à 250 g/l. A la connaissance de la Société demanderesse, un tel résultat n'avait jamais été atteint auparavant.

### EXEMPLE 2 : PREPARATION DE MATIERES PLASTIQUES PAR MISE EN OEUVRE DE COMPOSITIONS CONFORMES OU NON A L'INVENTION

Dans un dispositif de type "RHEOCORD 90" équipé d'une extrudeuse bi-vis d'appellation "RHEOMEX TW 100" opérant à une vitesse de 30 tours/minute et à une température de consigne de 255°C, on réalise d'abord un mélange-maître à base de polypropylène (grade "P243L" de BOREALIS) et de, respectivement, 1,1 % en poids par rapport au polypropylène,
- soit d'une poudre commerciale de MDBS de faible densité aérée telle que décrite au niveau de l'EXEMPLE 1,
- soit de chacune des poudres à écoulement amélioré, conformes à l'invention telles que décrites au niveau de l'EXEMPLE 1,
- soit de poudres non conformes à l'invention obtenues dans les mêmes conditions que celles décrites au niveau de l'EXEMPLE 1, par mise en oeuvre de 11 % (/poids de MDBS) de composés gras tels que de la végétaline, de la triacétine, de l'acide stéarique, de l'acide laurique, du SPAN^{R} 85 ou du TWEEN^{R} 80.

Chacun des mélanges-maîtres obtenu est réintroduit dans du polypropylène vierge et ce, à un taux d'incorporation tel que le mélange final, lequel subit un deuxième cycle d'extrusion, contient 0,2 %, en poids, de MDBS, adjuvanté ou non.

Chacune des matières plastiques ainsi obtenues est injectée, à 240°C, sur une presse de type "ALL ROUNDER 200", la température de refroidissement du moule étant fixée à 17°C.

Les articles injectés obtenus se présentent sous forme d'éprouvettes normalisées de 2 mm d'épaisseur.

### EXEMPLE 3 : CARACTERISATION DES MATIERES PLASTIQUES OBTENUES

Pour chacun des articles injectés obtenus selon l'EXEMPLE 2, on évalue à partir de mesures faîtes sur un dispositif "HAZE GUARD PLUS" le gain (+) ou, inversement, la perte (-) en transparence, calculé par différence des valeurs de trouble ("haze") mesurées sur l'échantillon par rapport au témoin, i.e celui auquel on a incorporé 0,2 % de MDBS seul.

On évalue également, par analyse sensorielle, l'effet positif, négatif ou nul des compositions de MDBS sur l'odeur de la matière plastique injectée, le témoin étant également constitué de l'échantillon auquel on a incorporé 0,2 % de MDBS non adjuvanté.

Ce test organoleptique est effectué de la manière suivante. Pour chaque composition de MDBS testée, on prélève 15 éprouvettes injectées que l'on répartit dans 3 flacons en verre hermétiques de type "twist off" de 400 ml, à raison de 5 éprouvettes/flacon. Les éprouvettes sont laissées une semaine dans les pots, à température ambiante. Elles sont alors évaluées "en aveugle" par un jury expert de 15 personnes.

La synthèse des évaluations obtenues pour chaque composition de MDBS testée permet de comparer celle-ci au témoin avec MDBS non adjuvanté et ce, selon la notation suivante :
- notation "0" : odeur équivalente au témoin,
- notation "+" : odeur moins perceptible que celle du témoin, le nombre de "+" étant proportionnel à la diminution du problème d'odeur/témoin,
- notation "-" : odeur plus perceptible ou plus désagréable que celle du témoin, le nombre de "-" étant proportionnel à l'augmentation du problème d'odeur/témoin.

Les résultats de ces tests de transparence et d'odeur sont repris ci-après, en fonction du produit utilisé en association avec le MDBS.

Il est entendu que l'amélioration de la stabilité du MDBS peut se concrétiser, soit par l'amélioration d'une seule des deux caractéristiques étudiées (transparence ou odeur), cette amélioration ne s'accompagnant au pire que d'un effet négatif mineur sur l'autre caractéristique (odeur ou transparence respectivement) soit, de préférence, par l'amélioration des deux caractéristiques.

| | Gain (+) / Perte (-) en % en trouble | Effet positif (+), négatif (-) ou nul |
|---|---|---|
| | ("haze") / témoin | (0) sur l'odeur (/ témoin) |
| Témoin = MDBS seul | 0 | 0 |
| MDBS + glycérol* | + 18 | ++ |
| MDBS + sorbitol* | + 11 | 0 |
| MDBS + pentaérythritol* | + 9 | ++ |
| MDBS + vitamine E* | + 4 | + |
| MDBS + végétaline | 0 | ---- |
| MDBS + triacétine | - 15 | -- |
| MDBS + acide stéarique | - 15 | -- |
| MDBS + acide laurique | - 24 | -- |
| MDBS + SPAN® 85 | + 19 | --- |
| MDBS + TWEEN® 80 | + 10 | -- |

| | | |
|---|---|---|
| * adjuvant utilisé selon l'invention | | |

Ces résultats montrent que seuls parmi les produits testés, les adjuvants sélectionnés selon l'invention permettent d'augmenter la stabilité d'acétals d'alditol tels que le MDBS et ce, notamment, par réduction ou masquage des odeurs indésirables décelables qu'ils génèrent, en particulier suite à un traitement thermique. Et il est remarquable de constater que non seulement de tels adjuvants sont aptes à améliorer à la fois l'écoulement et la stabilité d'acétals d'alditol en termes d'odeurs, mais que cette double faculté ne se fait aucunement au détriment de l'efficacité de ces produits, voire augmente significativement cette efficacité. Dans le cas du glycérol, du sorbitol, du pentaérythritol et de la vitamine E, par exemple, on constate en effet une synergie en termes de diminution du trouble.

### EXEMPLE : PREPARATION D'UNE COMPOSITION DE MDBS CONFORMEMENT A L'EXEMPLE 1 DU BREVET JP 9-286788.

Conformément au protocole décrit dans l'exemple 1 du brevet JP 9-286788, on disperse 10g de pentaérythritol dans 400ml d'isopropanol.

On ajoute une suspension de 90g de MDBS dans 600g de méthanol. Le MDBS utilisé se présente sous la forme d'une poudre ne s'écoulant par librement et de densité aérée faible (148g/l).

Le mélange est porté à reflux sous agitation pendant 30 minutes, puis évaporé à sec sous vide. Le produit obtenu est ensuite broyé.

Il présente un mauvais écoulement et un caractère collant. Sa densité aérée n'est pas augmentée mais, au contraire, est significativement diminuée (125g/l).

## Revendications

1. Composition d'acétal d'alditol à écoulement amélioré et/ou à stabilité améliorée, **caractérisée en ce qu'**elle comprend au moins un acétal d'alditol et au moins un adjuvant choisi dans le groupe comprenant les tocophérols et leurs dérivés ainsi que les polyols et leurs dérivés non gras et **en ce qu'**elle présente une densité aérée supérieure à 250 g/l.

2. Composition selon la revendication 1, **caractérisée en ce que** l'acétal d'alditol est un diacétal d'alditol choisi dans le groupe comprenant le 1,3-2,4-di(benzylidène) sorbitol ("DBS"), le 1,3-2,4-di(benzylidène) xylitol ("DBX") et leurs dérivés, notamment alcoylés et/ou halogénés, de préférence le DBS et ses dérivés alcoylés.

3. Composition selon la revendication 2, **caractérisée en ce que** le diacétal d'alditol est choisi parmi les dérivés méthylés du DBS, en particulier ceux obtenus par déhydrocondensation du sorbitol avec un benzaldéhyde méthylé, pour le moins, en position 3 ou 4 de son cycle.

4. Composition selon l'une quelconque des revendications 1 à 3, **caractérisée en ce qu'**elle comprend de 50 à 99 %, en poids, d'acétal(s) d'alditol et de 1 à 50 %, en poids, d'adjuvant(s), ces pourcentages étant exprimés par rapport au poids total d'acétal(s) d'alditol et d'adjuvant(s) contenu dans ladite composition.

5. Composition selon la revendication 4, **caractérisée en ce qu'**elle comprend de 1 à 20 %, de préférence de 3 à 20 %, en poids, d'adjuvant(s).

6. Composition selon l'une des revendications 1 à 5, **caractérisée en ce qu'**elle se présente sous forme pulvérulente et/ou granulaire, en particulier sous forme d'une poudre densifiée ou compactée, de granules, de "pellets", de pastilles ou d'extrudats.

7. Composition selon l'une des revendications 1 à 6, **caractérisée en ce qu'**elle présente une densité aérée comprise entre 275 et 700 g/l, et plus préférentiellement comprise entre 300 et 650 g/l.

8. Composition selon l'une quelconque des revendications 6 ou 7, **caractérisée en ce qu'**elle consiste en une composition pulvérulente de diacétal d'alditol alcoylé, en particulier méthylé, s'écoulant librement.

9. Composition selon l'une quelconque des revendications 1 à 8, **caractérisée en ce que** l'acétal d'alditol est un diacétal d'alditol alcoylé, en particulier méthylé, **en ce que** l'adjuvant qu'elle contient est solide à température ambiante et **en ce que** le diacétal d'alditol alcoylé qu'elle contient se présente majoritairement sous la forme de cristaux en bâtonnets de longueur comprise entre 5 et 10 µm et dont les contours sont bien individualisés.

10. Composition selon l'une quelconque des revendications 7 à 9, **caractérisée en ce qu'**elle présente une densité aérée comprise entre 300 et 490 g/l.

11. Procédé pour améliorer l'écoulement et/ou la stabilité d'un acétal d'alditol, **caractérisé en ce qu'**il comporte au moins une étape au cours de laquelle on mélange et on met en forme et/ou on densifie de manière quelconque, en particulier par granulation, compactage ou extrusion, ledit acétal d'alditol avec au moins 1 % en poids, exprimé par rapport au poids total du mélange, d'un adjuvant choisi parmi les tocophérols et leurs dérivés, les polyols et leurs dérivés non gras et les mélanges quelconques de ces produits.

12. Procédé selon la revendication 11, **caractérisé en ce que** :
- on mélange, à froid, et on met en forme et / ou on densifie, également à froid, ledit acétal d'alditol, et
- ledit adjuvant est apporté ou maintenu à l'état solide.

13. Procédé selon la revendication 12, **caractérisé en ce qu'**on mélange ledit acétal d'alditol avec 3 à 20 % en poids dudit adjuvant.

14. Procédé selon l'une quelconque des revendications 11 à 13, **caractérisé en ce que** ledit adjuvant est un agent stabilisant ou masquant d'odeur dudit acétal d' alditol.

15. Utilisation d'une composition selon l'une quelconque des revendications 1 à 10 ou obtenue selon l'une quelconque des revendications 11 à 14, en vue de la préparation de matières plastiques ou de matières gélifiées ou de la préparation d'additifs destinés auxdites matières.

## Claims

1. An alditol acetal composition with improved flow behavior and/or improved stability, **characterized in that** it includes at least one alditol acetal and at least one additive selected from the group comprising tocopherols and their derivatives and polyols and their non-fatty derivatives, and it has an aerated density greater than 250 g/l.

2. A composition according to Claim 1, **characterized in that** the alditol acetal is an alditol diacetal selected from the group comprising 1,3-2,4-di(benzylidene) sorbitol (DBS), 1,3-2,4-di(benzylidene) xylitol (DBX) and their derivatives, in particular alkylated and/or halogenated derivatives, preferably DBS and its alkylated derivatives.

3. A composition according to Claim 2, **characterized in that** the alditol diacetal is selected from among methylated derivatives of DBS, in particular those obtained by dehydrocondensation of sorbitol with a benzaldehyde which is methylated in at least position 3 or 4 of its ring.

4. A composition according to any one of Claims 1 to 3, **characterized in that** it comprises 50 wt.% to 99 wt.% of alditol acetal(s), and 1 wt.% to 50 wt.% of additive(s), these percentages being expressed with respect to the total weight of alditol acetal(s) and additive(s) contained in said composition.

5. A composition according to Claim 4, **characterized in that** it comprises 1 wt.% to 20 wt.%, preferably 3 wt.% to 20 wt.%, of additive(s).

6. A composition according to any one of Claims 1 to 5, **characterized in that** it is in a powdery and/or granular form, in particular in the form of densified or compacted powder, of granules, pellets, pastilles or extrudates.

7. A composition according to any one of Claims 1 to 6, **characterized in that** it has an aerated density in the range 275 g/l to 700 g/l, preferably in the range 300 g/l to 650 g/l.

8. A composition according to any one of Claims 6 or 7, **characterized in that** it consists in a freely flowing powdery composition of alkylated alditol diacetal, in particular methylated.

9. A composition according to any one of Claims 1 to 8, **characterized in that** the alditol acetal is an alkylated alditol diacetal, in particular methylated, **in that** the additive it contains is solid at ambient temperature and **in that** the alkylated alditol diacetal it contains is present in majority in the form of rod crystals of a length of 5 to 10 µm and which edge is well individualized.

10. A composition according to any one of Claim 7 to 9, **characterized in that** it has an aerated density in the range 300 g/l to 490 g/l.

11. A process for improving the flow behavior and/or the stability of an alditol acetal, **characterized in that** it includes at least one step during the course of which said alditol acetal is mixed and shaped and/or densified in any manner, in particular by granulation, compaction or extrusion, with at least 1 wt.%, with respect to the total weight of the mixture, of an additive selected from tocopherols and their derivatives, polyols and their non-fatty derivatives and any mixtures of these products.

12. A process according to Claim 11, **characterized in that**:
- said alditol acetal is mixed cold, and is shaped and/or densified also cold, and
- said additive is brought or maintained in a solid state.

13. A process according to Claim 12, **characterized in that** said alditol acetal is mixed with 3 wt.% to 20 wt.% of said additive.

14. A process according to any one of Claims 11 to 13, **characterized in that** said additive is a stabilizing agent or odor masking agent for the alditol acetal.

15. Use of a composition according to any one of Claims 1 to 10, or obtained in accordance with any one of Claims 11 to 14, for the preparation of plastics materials or jellified materials or the preparation of additives intended for use in such materials.

## Patentansprüche

1. Alditolacetal-Zusammensetzung mit verbessertem Fließverhalten und/oder verbesserter Stabilität, **dadurch gekennzeichnet, daß** sie mindestens ein Alditolacetal und mindestens einen Zusatzstoff umfaßt, der aus der Gruppe ausgewählt ist, die die Tocopherole und ihre Derivate sowie die Polyole und ihre nichtfetten Derivate umfaßt, und daß sie eine Schüttdichte über 250 g/l aufweist.

2. Zusammensetzung nach Anspruch 1, **dadurch gekennzeichnet, daß** das Alditolacetal ein Alditoldiacetal ist, das aus der Gruppe ausgewählt ist, die 1,3-2,4-Di(benzyliden)sorbit ("DBS"), 1,3-2,4-Di(benzyliden)xylit ("DBX") und ihre insbesondere alkylierten und/oder halogenierten Derivate, vorzugsweise DBS und seine alkylierten Derivate, umfaßt.

3. Zusammensetzung nach Anspruch 2, **dadurch gekennzeichnet, daß** das Alditoldiacetal aus den methylierten Derivaten von DBS ausgewählt ist, insbesondere denjenigen, die durch Dehydrokondensation von Sorbit mit einem Benzaldehyd, der mindestens eine Methylgruppe an der Position 3 oder 4 seines Ringes enthält, erhalten wurden.

4. Zusammensetzung nach einem der Ansprüche 1 bis 3, **dadurch gekennzeichnet, daß** sie 50 bis 99 Gew.-% Alditolacetal(e) und 1 bis 50 Gew.-% Zusatzstoff(e) enthält, wobei diese Pronzentsätze sich auf das in der Zusammensetzung enthaltene Gesamtgewicht von Alditolacetal(en) und Zusatzstoff(en) beziehen.

5. Zusammensetzung nach Anspruch 4, **dadurch gekennzeichnet, daß** sie 1 bis 20 Gew.-% und vorzugsweise 3 bis 20 Gew.-% Zusatzstoff(e) enthält.

6. Zusammensetzung nach einem der Ansprüche 1 bis 5, **dadurch gekennzeichnet, daß** sie in Form von Pulver und/oder Granulat, insbesondere in Form eines verdichteten oder kompaktierten Pulvers, von Körnchen, von "Pellets", von Pillen oder von Extrudaten vorliegt.

7. Zusammensetzung nach einem der Ansprüche 1 bis 6, **dadurch gekennzeichnet, daß** sie eine Schüttdichte zwischen 275 und 700 g/l und bevorzugter zwischen 300 und 650 g/l besitzt.

8. Zusammensetzung nach einem der Ansprüche 6 oder 7, **dadurch gekennzeichnet, daß** sie aus einer frei fließenden pulverförmigen Zusammensetzung von alkyliertem, insbesondere methyliertem Alditoldiacetal besteht.

9. Zusammensetzung nach einem der Ansprüche 1 bis 8, **dadurch gekennzeichnet, daß** das Alditolacetal ein alkyliertes, insbesondere methyliertes Alditoldiacetal ist, daß der Zusatzstoff, den sie enthält, bei Raumtemperatur fest ist und daß das alkylierte Alditoldiacetal, das sie enthält, zum größeren Teil in Form von stabförmigen Kristallen mit einer Länge von 5 bis 10 µm, deren Umrisse gut vereinzelt sind, vorliegt.

10. Zusammensetzung nach einem der Ansprüche 7 bis 9, **dadurch gekennzeichnet, daß** sie eine Schüttdichte zwischen 300 und 490 g/l aufweist.

11. Verfahren zur Verbesserung des Fließverhaltens und/oder der Stabilität eines Alditolacetals, **dadurch gekennzeichnet, daß** es mindestens einen Schritt umfaßt, in dem man das Alditolacetal mit mindestens 1 Gew.-%, bezogen auf das Gesamtgewicht der Mischung, eines Zusatzstoffes, der aus den Tocopherolen und ihren Derivaten, den Polyolen und ihren nichtfetten Derivaten und den beliebigen Mischungen dieser Produkte ausgewählt ist, mischt und in Form bringt und/oder auf beliebige Weise, insbesondere durch Granulierung, Kompaktieren oder Extrusion, verdichtet.

12. Verfahren nach Anspruch 11, **dadurch gekennzeichnet, daß**
- man das Alditolacetal kalt mischt und ebenfalls kalt in Form bringt und/oder verdichtet und
- der Zusatzstoff im festen Zustand zugeführt oder gehalten wird.

13. Verfahren nach Anspruch 12, **dadurch gekennzeichnet, daß** man das Alditolacetal mit 3 bis 20 Gew.-% Zusatzstoff mischt.

14. Verfahren nach einem der Ansprüche 11 bis 13, **dadurch gekennzeichnet, daß** der Zusatzstoff ein das Alditolacetal stabilisierendes oder seinen Geruch maskierendes Mittel ist.

15. Verwendung einer Zusammensetzung nach einem der Ansprüche 1 bis 10 oder erhalten nach einem der Ansprüche 11 bis 14 für die Herstellung von Kunststoffen oder gelierten Stoffen oder für die Herstellung von für diese Stoffe bestimmten Zusätzen.
